# EUROPEAN PATENT APPLICATION

(11) **EP 3 552 484 A1**
(43) Date of publication of application: **16.10.2019**
(21) Application number: 18425025.6
(22) Date of filing: 10.04.2018
(51) Int. Cl.: A01K 1/01, A01K 1/03

(54) **CAGE FOR MOUSE STABULATION WITHOUT MANIPULATION**

(71) Applicant: Zappalà, Alessandro, 00044 Frascati (IT)
(72) Inventor: Zappalà, Alessandro, 00044 Frascati (IT)

(57) **Abstract**

This invention allows to change rodents and other small animals' litter without touching them, avoiding unnecessary stress and/or contaminating both operator and the animal, in case it is immunocompromised, immunodeficient or contagious.

The invention consists in a shoe box-shaped transparent plastic cage with two drawers, one over the other, that can be filled with litter, removed and exchanged in position: when the upper one is removed, the animals in it land on the lower one, the upper drawer is cleaned and the two drawers are switched in place.

## Description

This invention was born in order toimprovestabulation conditions of rodents used for scientific purposes, focusing mainly on litter changing: it is acknowledged from literature(Hurst & West 2010; Gouveia et al., 2013; Gouveia et al., 2017) that the handling needed for this procedure increases animals' stresslevels, thus having repercussions on tests results; the device here described allows to change litter without manipulations from responsible personnel, thus mitigating procedure's anxiogenic effects.

The object in exam is formed from a shoe box-shaped cage made in transparent plastic material, with rectangular opening on the short side in order to contain two identical drawers (a superior and an inferior one) filled with litter: the animal is supposed to defecate/urinate in the upper drawer, that can be extracted, emptied, cleaned, filled with fresh litter and put in the place of the inferior drawer; during upper drawer's removal, the animal will eventually land on the lower drawer, that will be slid in place of the upper one.

This invention is particularly useful also for contagious, immunodeficient or immunocompromised animals because it reduces the chances of contagion both for animals and for operators; it also allows to speed up the litter changing procedure, thus reducing time and costs.

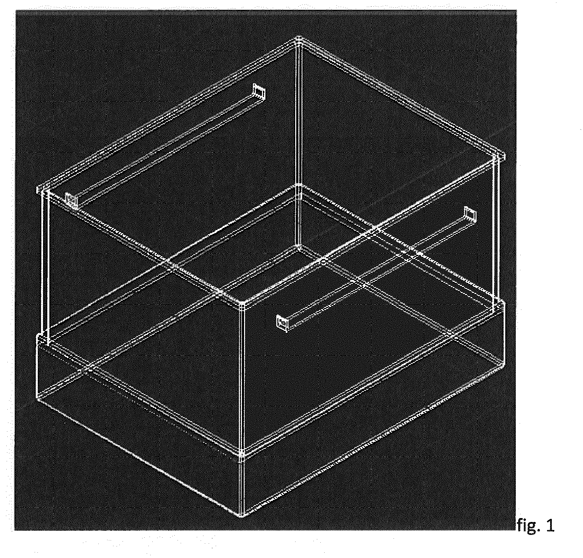

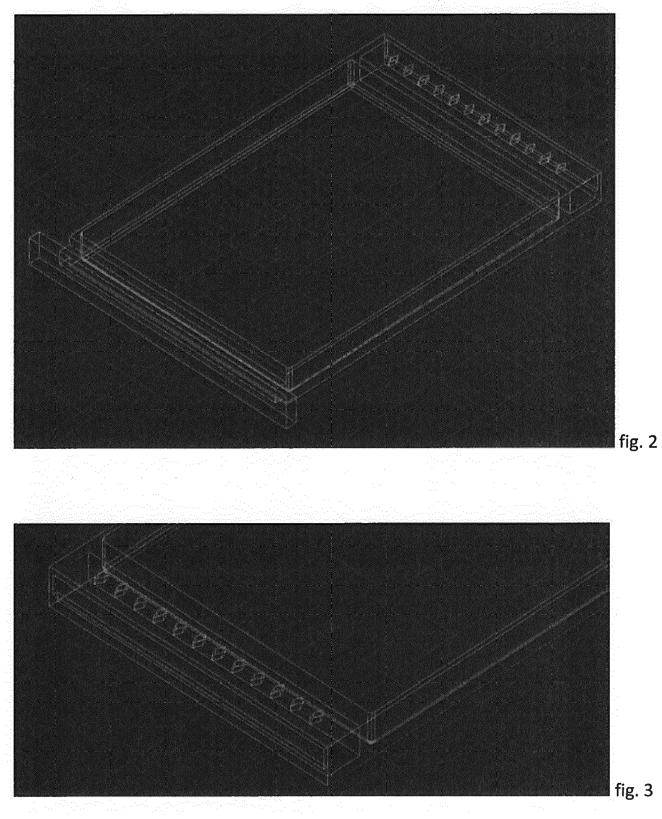

## Claims

1. A stabulation cage made with transparent plastic material **characterized by** the presence of two rectangular openings on the minor surface sides, one for each side;

2. At least two drawers made with plastic material endowed with a handle, disposable as they can be inserted in the openings described at claim 1 piled one on the other;

3. A space located on the opposite side of the drawers' handle cited at claim 2 designed to catch eventual faecal material or litter caused by drawers' extraction.
